# EUROPÄISCHE PATENTSCHRIFT

(11) **EP 1 006 271 B1**
(45) Veröffentlichungstag und Bekanntmachung des Hinweises auf die Patenterteilung: **30.09.2009**
(21) Anmeldenummer: 99810994.6
(22) Anmeldetag: 02.11.1999
(51) Int. Cl.: G01B 17/02, G01N 29/11, F16J 9/12, F02D 41/28, F15B 15/28

(54) **Verfahren und Anordnung zur Bestimmung des Zustands eines Gegenlaufpartners im Zylinder einer Brennkraftmaschine**
Method and device for the determination of the status of a moving part in the cylinder of an internal-combustion engine
Procédé et dispositif pour la détermination du statut d'une pièce mobile dans le cylindre d'un moteur à combustion interne

(30) Priorität: 01.12.1998 EP 98811192
(43) Veröffentlichungstag der Anmeldung: 07.06.2000
(73) Patentinhaber: Wärtsilä Schweiz AG, 8401 Winterthur (CH)
(72) Erfinder: Svimbersky, Karl, 8404 Winterthur (CH)
(74) Vertreter: Sulzer Management AG

(56) Entgegenhaltungen:
- EP-A- 0 056 905
- EP-A- 0 706 039
- US-A- 3 930 404
- US-A- 4 711 120
- PATENT ABSTRACTS OF JAPAN Bd. 010, Nr. 243 (P-489), 21. August 1986 (1986-08-21) & JP 61 075207 A (MITSUBISHI HEAVY IND LTD), 17. April 1986 (1986-04-17)
- PATENT ABSTRACTS OF JAPAN Bd. 016, Nr. 380 (M-1295), 14. August 1992 (1992-08-14) & JP 04 124444 A (MITSUBISHI HEAVY IND LTD), 24. April 1992 (1992-04-24)
- DATABASE WPI Section EI, Week 8512 Derwent Publications Ltd., London, GB; Class S02, AN 073203 XP002101933 & SU 1 109 591 A (KONSTANTINOV VLADIMIR A ;YAKUBOVICH EVGENIJ V (SU); SHEVCHUK OLGA) 23. August 1984 (1984-08-23)
- PATENT ABSTRACTS OF JAPAN Bd. 1996, Nr. 05, 31. Mai 1996 (1996-05-31) & JP 08 014099 A (MITSUBISHI HEAVY IND LTD), 16. Januar 1996 (1996-01-16)
- PATENT ABSTRACTS OF JAPAN Bd. 012, Nr. 427 (P-784), 11. November 1988 (1988-11-11) & JP 63 159730 A (MITSUBISHI HEAVY IND LTD), 2. Juli 1988 (1988-07-02)
- PATENT ABSTRACTS OF JAPAN Bd. 013, Nr. 422 (P-933), 20. September 1989 (1989-09-20) & JP 01 153934 A (MITSUBISHI HEAVY IND LTD), 16. Juni 1989 (1989-06-16)

## Beschreibung

Die Erfindung betrifft ein Verfahren und eine Anordnung zur Bestimmung des Zustands eines Gegenlaufpartners im Zylinder einer Brennkraftmaschine.

In Brennkraftmaschinen, insbesondere in Grossdieselmotoren, wie sie beispielsweise als Antriebsaggregate für Schiffe oder in stationären Anlagen zur Stromerzeugung eingesetzt werden, unterliegen die Gegenlaufpartner im Zylinder einem natürlichen Verschleiss. Mit Gegenlaufpartner sind dabei die Teile im Zylinder gemeint, die bei der Hubbewegung des Kolbens aneinander vorbeigleiten, also insbesondere die Lauffläche des Zylindereinsatzes, entlang welcher sich der Kolben im Betriebszustand bewegt, die Kolbenringe, die im normalen Zustand über die Lauffläche gleiten, sowie der üblicherweise auf der Lauffläche vorgesehene Schmierölfilm. Der Verschleiss des Zylindereinsatzes und der Kolbenringe wird von verschiedenen Grössen wie z. B. dem verwendeten Brennstoff (bei Grossdieselmotoren ist dies üblicherweise Schweröl), dem verwendeten Schmieröl und dem Belastungsprofil des Motors beeinflusst und ist daher, wenn überhaupt, nur sehr schwer theoretisch oder aufgrund von Erfahrungswerten abschätzbar.

Zudem können beim Betrieb des Motors anormal hohe Verschleisswerte auftreten, aus denen schwere und kostspielige Folgeschäden resultieren können. Deshalb ist es wünschenswert, das Kolbenlaufverhalten und insbesondere den Zustand der Gegenlaufpartner während des Betriebs der Brennkraftmaschine - also sozusagen on line - zu überwachen, damit beispielsweise beim Auftreten eines anormal hohen Verschleisses rechtzeitig Gegenmassnahmen ergriffen werden können, um grössere Folgeschäden zu vermeiden.

Für Grossdieselmotoren sind Vorrichtungen bekannt, bei denen mittels eines induktiven Messprinzips der Verschleisszustand eines Kolbenrings während des Betriebs bestimmbar ist. Hierzu ist, wie z. B. in der EP-A-706 039 offenbart, im Zylindereinsatz eine Abtastvorrichtung vorgesehen. Diese umfasst einen magnetischen Kreis und einen an diesen gekoppelten elektrischen Kreis. Der zu überwachende Kolbenring ist aus einem magnetisierbaren Material gefertigt und weist einen Einsatz aus einem nicht magnetisierbaren Material auf, der sich in radialer Richtung gesehen verjüngt. Wenn der Kolbenring während der Hubbewegung des Kolbens die Abtastvorrichtung passiert, wird in dieser eine Spannung induziert, die als Messsignal erfasst wird. Durch den nicht magnetisierbaren Einsatz wird dieses Messsignal verändert. Da sich der Einsatz in radialer Richtung verjüngt, ist die durch ihn bewirkte Signaländerung ein Mass für den Verschleiss des Kolbenrings.

Auch wenn sich solche Vorrichtungen in der Praxis bewährt haben, so weisen sie jedoch einige Einschränkungen auf. Aufgrund des nicht magnetisierbaren Einsatzes müssen die Kolbenringe speziell ausgestaltet werden. Zudem sind einige der heute bekannten, sehr verschleissresistenten Materialien für Kolbenringe für ein Zusammenwirken mit einer solchen induktiven Abtastvorrichtung nicht geeignet. Ferner können mit dieser bekannten Vorrichtung zumindest keine unmittelbaren Aussagen über den Zustand der Läuffläche gewonnen werden.

Aus der US-A-4711120 ist ein Verfahren zur Überwachung des Verschleisses einer Zylinderwand mittels Ultraschall bekannt.

Hier will die Erfindung Abhilfe schaffen. Daher ist es eine Aufgabe der Erfindung, eine Verfahren und eine Anordnung vorzuschlagen, mit denen der Zustand der Gegenlaufpartner, also insbesondere der Lauffläche und der Kolbenringe, im Zylinder einer Brennkraftmaschine während des Betriebs bestimmbar ist. Insbesondere soll es die Erfindung ermöglichen, den Verschleiss der Lauffläche und der Kolbenringe bei laufendem Motor zu ermitteln.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Erfindungsgemäss wird also ein Verfahren und eine Anordnung zur Bestimmung des Zustands eines Gegenlaufpartners im Zylinder einer Brennkraftmaschine vorgeschlagen, welche Brennkraftmaschine einen mit mindestens einem Kolbenring versehenen Kolben aufweist, der entlang einer Lauffläche eines Zylindereinsatzes im Zylinder hin- und herbeweglich angeordnet ist. Gemäss dem Verfahren wird mittels eines im Zylinder angeordneten Ultraschallwandlers der Gegenlaufpartner mit Ultraschallsignalen beaufschlagt und die von dem Gegenlaufpartner reflektierten Echosignale werden zur Bestimmung des Zustands des Gegenlaufpartners herangezogen. Die Anordnung umfasst einen Ultraschallwandler, der so im Zylinder angeordnet ist, dass er den Gegenlaufpartner mit Ultraschallsignalen beaufschlagen und die von dem Gegenlaufpartner reflektierten Echosignale empfangen kann.

Die Erfindung basiert also auf der Idee, Ultraschall zur Bestimmung des Zustands eines Gegenlaufpartners im Zylinder einer Brennkraftmaschine zu verwenden.

Dazu werden die Gegenlaufpartner, also insbesondere die Lauffläche und/oder die Kolbenringe mit Ultraschallsignalen beaufschlagt. Diese Ultraschallsignale werden an den Grenzflächen, die einen Übergang zwischen Medien mit unterschiedlichem Schallwellenwiderstand darstellen, also z. B. an der Lauffläche des Zylinders und an der Oberfläche eines Kolbenrings, teilweise refelektiert und teilweise transmittiert. Die reflektierten Signale gelangen als Echosignale zurück zum Ultraschallwandler, der diese Echosignale in elektrische Signale umwandelt. Aus der Laufzeit des Schalls bzw. aus der Laufzeitdifferenz zwischen den einzelnen Echosignalen lassen sich dann solche Parameter wie die aktuelle Dicke des Zylindereinsatzes oder die aktuelle Dicke des Kolbenrings ermitteln. Mit diesem Verfahren ist somit der Zustand und insbesondere der Verschleiss der Lauffläche und der Kolbenringe während des Betriebs der Brennkraftmaschine in einfacher Weise messtechnisch erfassbar. Vorteilhaft ist dabei insbesondere, dass es keiner speziellen Ausgestaltungen der Gegenlaufpartner bedarf, um ihren Zustand mit dem erfindungsgemässen Verfahren bzw. der erfindungsgemässen Anordnung zu bestimmen. Das Verfahren und die Anordnung sind universell für Brennkraftmaschinen anwendbar, insbesondere für Grossdieselmotoren, die nach dem Zweitakt- oder dem Viertakt-Prinzip arbeiten und beispielsweise mit Schweröl, Dieselöl oder Gas als Brennstoff betrieben werden. Die Erfindung eignet sich zur Bestimmung des Zustands aller an sich bekannten Kolbenringe, also insbesondere auch für plasma- oder galvanisch beschichtete Kolbenringe, wobei die Erfindung für beschichtete Kolbenringe den zusätzlichen Vorteil mit sich bringt, dass auch die Dicke der Beschichtung bestimmt werden kann.

Vorzugsweise werden bei dem erfindungsgemässen Verfahren die Echosignale einer Auswerteeinheit zugeführt, welche anhand der Echosignale repräsentative Werte für mindestense eine der folgenden Grössen bestimmt:
- absoluter und/oder relativer Verschleiss des Zylindereinsatzes;
- Dicke des Kolbenrings oder der Kolbenringe in der bezüglich der Zylinderachse radialen Richtung;
- radiale Dicke einer auf dem Kolbenring vorgesehen Beschichtung;
- radiale Breite eines Luftspalts zwischen dem Kolbenring und der Lauffläche
- radiale Dicke eines Ölfilms zwischen dem Kolbenring und der Lauffläche.

In einer bevorzugten Ausführungsform wird ein Referenzsignal zum Kompensieren thermisch bedingter Änderungen erzeugt und zur Bestimmung des Zustands des Gegenlaufpartners herangezogen. Hierdurch wird dem Umstand Rechnung getragen, dass die Brennkraftmaschine üblicherweise mit unterschiedlichen Drehzahlen bzw. mit wechselnden Lasten (Volllast, Teillast) betrieben wird und daher die Temperatur im Zylinder schwankt. Mit Hilfe des Referenzsignals lassen sich dann thermisch bedingte Änderungen in den Messsignalen kompensieren, das heisst die Messsignale können anhand des Referenzsignals kalibriert werden. Daher umfasst die Anordnung vorzugsweise Mittel zum Erzeugen eines solchen Referenzsignals. Gemäss einer bevorzugten Ausgestaltung umfassen diese Mittel zum Erzeugen eines Referenzsignals einen weiteren Ultraschallwandler, der so angeordnet ist, dass er die radial innenliegende Begrenzugsfläche des Zylindereinsatzes in einem Bereich mit Ultraschallsignalen beaufschlagt, der ausserhalb des von den Kolbenringen bei der Hubbewegung des Kolbens überstrichenen Bereichs liegt. Da dieser Bereich keinem Verschleiss durch die Bewegung der Kolbenringe unterliegt, kann die in diesem Bereich mittels Ultraschall ermittelte Wandstärke als Referenzsignal zur Kompensation von Temperaturschwankungen verwendet werden.

Der Ultraschallwandler ist vorzugsweise in einer im Zylindereinsatz vorgesehen Ausnehmung angeordnet, die so platziert ist, dass alle Kolbenringe bei der Hubbewegung des Kolbens den Ultraschallwandler passieren. Bei dieser Anordnung durchlaufen die einzelnen Ultraschallsignale zunächst einen Teil der Wandung des Zylindereinsatzes, werden an der Lauffläche teilweise reflektiert, und der transmittierte Anteil trifft dann je nach Kolbenstellung auf einen Kolbenring oder auf den Luftspalt zwischen Lauffläche und Kolben. Auf diese Weise können alle Kolbenringe bei der Hubbewegung des Kolbens sukzessive mit Ultraschall abgetastet werden.

Bevorzugt ist die Ausnehmung mit dem Ultraschallwandler im Kragen des Zylindereinsatzes, also in der Nachbarschaft des oberen Totpunkts der Kolbenbewegung angeordnet. Hier ist nämlich die Geschwindigkeit des Kolbens relativ gering, sodass genügend Zeit bleibt, um die einzelnen Kolbenringe abzutasten.

Auch ist es vorteilhaft, wenn sich die Ausnehmung in radialer Richtung erstreckt und zwischen dem Ultraschallwandler und der radial innenliegenden Begrenzungsfläche der Ausnehmung ein Kopplungselement vorgesehen ist, um die Ultraschallsignale von dem Ultraschallwandler auf die Lauffläche zu übertragen. Durch diese Massnahme ist nämlich der Ultraschallwandler von den heissesten Bereichen des Zylindereinsatzes entfernt angeordnet, sodass die Gefahr einer thermisch bedingten Schädigung oder Fehlfunktion des Wandlers vermieden wird.

Das erfindungsgemässe Verfahren bzw. die erfindungsgemässe Anordnung ist insbesondere für Grossdieselmotoren, z. B. Hauptmotoren von Schiffen, geeignet.

Weitere vorteilhafte Massnahmen und bevorzugte Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der teilweise schematischen, teilweise geschnittenenZeichnung zeigt:

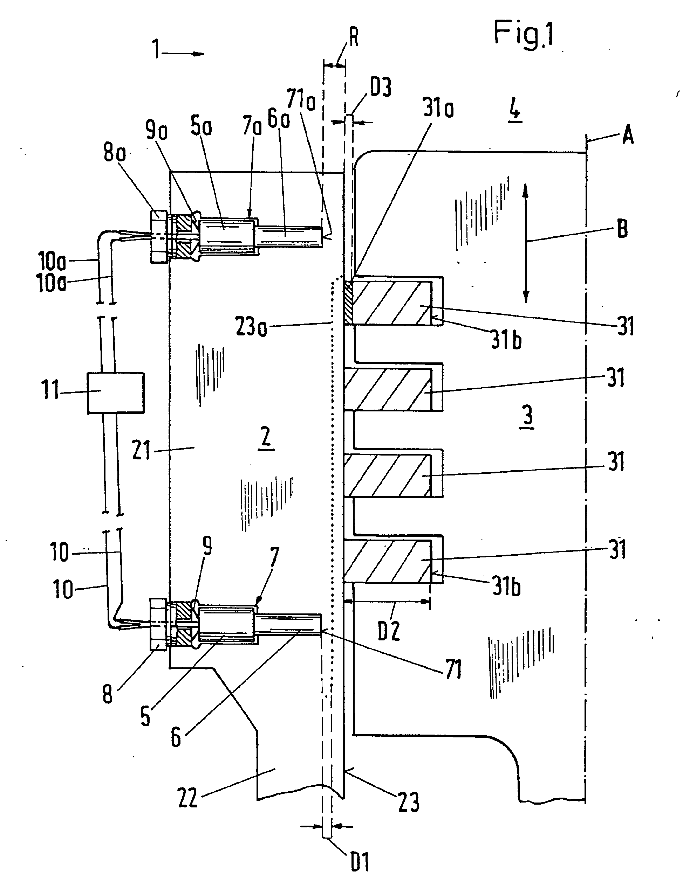

- Fig. 1:: ein Ausführungsbeispiel der erfindungsgemässen Anordnung im Zylindereinsatz einer Brennkraftmaschine.

Fig. 1 zeigt in einer Längsschnittdarstellung einen Ausschnitt aus einem Zylinder 1 eines Grossdieselmotors mit einer erfindungsgemässen Anordnung zur Bestimmung des Zustands eines Gegenlaufpartners. Die Zylinderachse des Zylinders 1 ist mit dem Bezugszeichen A bezeichnet. Eine zur Zylinderachse A senkrechte Richtung wird im Folgenden als radiale Richtung bezeichnet.

Der Zylinder 1 umfasst einen Zylindereinsatz 2, dessen radial innenliegende Begrenzungsfläche eine Lauffläche 23 für einen Kolben 3 bildet, der im Zylinder 1 hin- und herbeweglich angeordnet ist. Die Bewegungsrichtung des Kolbens 3 ist durch den Doppelpfeil B angedeutet. Die durchgezogen gezeichnete Lauffläche 23 repräsentiert den Neuzustand des Zylindereinsatzes 2, das heisst einen Zustand, bei dem noch kein Verschleiss aufgetreten ist. Die gepunktete Linie 23a deutet die Lauffläche in einem Zustand an, bei dem aufgrund der Relativbewegung zwischen dem Kolben 3 und der Lauffläche 23a ein Verschleiss aufgetreten ist, der zu einer Reduktion der Wandstärke des Zylindereinsatzes 2 geführt hat. Der Zylindereinsatz 2 umfasst in an sich bekannter Weise einen dickwandiger ausgestalteten Kragen 21 und ein dünnwandiger ausgestaltetes Hemd 22.

Fig. 1 zeigt den Koben 3 in seinem oberen Totpunkt. Darstellungsgemäss oberhalb des Kolbens 3 befindet sich der Brennraum 4 des Zylinders 1. Am Kolben 3 sind vier Kolbenringe 31 vorgesehen, die im Betriebszustand entlang der Lauffläche 23 gleiten. Die Kolbenringe 31 sind gegen die Lauffläche 23 hin vorgespannt, sodass sie dichtend an dieser anliegen, auch dann noch, wenn aufgrund des Verschleisses die Wandstärke des Zylindereinsatzes 2 abgenommen hat, wie dies durch die gepunktete Linie 23a angedeutet ist.. Die Kolbenringe können an ihrer radial äusseren Begrenzungsfläche in an sich bekannter Weise eine Beschichtung 31a aufweisen, so wie dies in Fig. 1 für den obersten Kolbenring 31 dargestellt ist. Diese Beschichtung 31 a ist im Neuzustand beispielsweise 0.1 mm bis 0.3 mm dick. Auf der Lauffläche 23 befindet sich ein Ölfilm zur Schmierung zwischen der Lauffläche 23 und den Kolbenringen 31.

Mit dem Begriff Gegenlaufpartner sind die im normalen Betrieb relativ zueinander bewegten und aneinander gleitenden Komponenten gemeint, bei diesem Ausführungsbeispiel also die Lauffläche 23 sowie die Kolbenringe 31 einschliesslich des dazwischen befindlichen Ölfilms.

Im Kragen 21 des Zylindereinsatzes 2 ist eine Ausnehmung 7 vorgesehen, die an der Aussenseite des Zylindereinsatzes 2 beginnt und sich von dort in radialer Richtung, also senkrecht zur Zylinderachse A, nach innen bis zu einer Begrenzungsfläche 71 erstreckt. Die radial innenliegende Begrenzungsfläche 71 befindet sich in einem Abstand R (bezogen auf den Neuzustand des Zylindereinsatzes 2) von der Lauffläche 23 entfernt. Aus praktischen Gründen beträgt der Abstand R vorzugsweise mindestens 1 cm. In die Ausnehmung 7 ist ein stabförmiges Kopplungselement 6 eingepasst, dessen eine Stirnfläche an der Begrenzungsfläche 71 anliegt. Die andere Stirnfläche des Kopplungselements 6 kontaktiert einen Ultraschallwandler 5, der ebenfalls in der Ausnehmung 7 angeordnet ist. Das Kopplungselement 6 und der Ultraschallwandler 5 sind mit Hilfe eines Befestigungsmittels, das hier als Verschraubung 8 ausgestaltet ist, in der Ausnehmung 7 montiert. Die Verschraubung 8 wirkt mit einem in der Ausnehmung 7 vorgesehenen Gewinde zusammen und ist von der Aussenseite des Zylindereinsatzes her betätigbar. Zwischen der Verschraubung 8 und dem Ultraschallwandler 5 ist ein Federelement 9 vorgesehen, welches den Ultraschallwandler 5 gegen das Kopplungselement 6 und letzteres gegen die Begrenzungsfläche 71 vorspannt. Durch dieses Federelement 9 können insbesondere thermisch bedingte Änderungen der Ausnehmung 7 kompensiert werden, ohne dass der Kontakt zwischen dem Ultraschallwandler 5 und dem Kopplungselement 6 sowie der Kontakt zwischen dem Kopplungselement 6 und der Begrenzungsfläche 71 verloren gehen.

Die Verschraubung 8 weist einen in radialer Richtung verlaufenden Durchlass auf, durch welchen elektrische Leitungen 10 geführt sind, die den Ultraschallwandler 5 mit einer Auswerteeinheit 11 verbinden. Eine für den Betrieb des Ultraschallwandlers 5 notwendige Versorgungseinheit, die in Fig. 1 nicht gesondert dargestellt ist, kann beispielsweise in die Auswerteeinheit 11 integriert sein.

Das Kopplungselement 6 besteht aus einem Material, das Ultraschall gut leitet, und überträgt die vom Ultraschallwandler 5 ausgesendeten Ultraschallsignale auf die Lauffläche 23 bzw. die Echosignale zum Ultraschallwandler 5. Durch das Kopplungselement 6 ist der Ultraschallwandler 5 weiter vom heissesten Bereich des Zylindereinsatzes 2 entfernt und daher weniger hohen Temperaturen ausgesetzt, sodass keine Gefahr eines thermisch bedingten Ausfalls des Ultraschallwandlers 5 oder einer thermisch bedingten Fehlfunktion besteht.

Die Ausnehmung 7 ist so im Kragen 21 des Zylindereinsatzes 2 platziert, dass alle Kolbenringe 31 bei der Hubbewegung des Kolbens 3 den Ultraschallwandler 5 bzw. seinen Messbereich passieren, das heisst wenn sich der Kolben 3, wie in Fig. 1 gezeigt, in seinem oberen Totpunkt befindet, ist die Ausnehmung 7 bezüglich der axialen Richtung (Richtung der Zylinderachse A) unterhalb des darstellungsgemäss untersten Kolbenrings 31.

Als Mittel zum Erzeugen eines Referenzsignals ist bei diesem Ausführungsbeispiel ein Referenzgeber 5a in Form eines weiteren Ultraschallwandlers 5a vorgesehen. Dieser ist in sinngemäss gleicher Weise wie im Zusammenhang mit dem Ultraschallwandler 5 erläutert in einer Ausnehmung 7a im Kragen 21 mittels einer Verschraubung 8a sowie eines Federelements 9a montiert und über ein stabförmiges Kopplungselement 6a mit der radial innenliegenden Begrenzungsfläche 71 a der Ausnehmung 7a schallleitend verbunden. Der Referenzgeber 5a ist über elektrische Leitungen 10a mit der Auswerteeinheit 11 verbunden.

Die Ausnehmung 7a für den Referenzgeber 5a ist bezüglich der axialen Richtung so im Kragen 21 platziert, dass sie sich noch oberhalb des obersten Kolbenrings 31 befindet, wenn der Kolben 3 in seinem oberen Totpunkt ist. Somit beaufschlagt der als Ultraschallwandler ausgestaltete Refernzgeber 5a einen Bereich der radial innenliegenden Begrenzungsfläche des Zylindereinsatzes 2, der bei der Hubbewegung des Kolbens von keinem der Kolbenringe 31 überstrichen wird und folglich keinem Verschleiss durch die Gleitbewegung der Kolbenringe entlang der Lauffläche 23 unterliegt. Aus diesem Grunde kann die radiale Wandstärke zwischen der Begrenzungsfläche 71 a der Ausnehmung 7a und der radial innenliegende Begrenzungsfläche des Zylindereinsatzes 2, die bei diesem Ausführungsbeispiel gleich gross ist wie der Abstand R, und mittels des Ultraschallwandlers 5a bestimmbar ist, als Referenzsignal zum Kompensieren thermisch bedingter Änderungen verwendet werden.

Im Folgenden wird nun die Funktionsweise des in Fig. 1 dargestellten Ausführungsbeispiels erläutert. Während des Betriebs der Brennkraftmaschine sendet der Ultraschallwandler 5 Ultraschallsignale in Form von Ultraschallimpulsen aus, wobei die Rate der Ultraschallimpulse so bemessen ist, dass bei der Hubbewegung des Kolbens 3 jeder Kolbenring 31 von mindestens einem separaten Ultraschallimpuls beaufschlagt wird. Mit heute bekannten Ultraschallmesssystemen ist es möglich, Raten von beispielsweise bis zu 2000 Messungen pro Sekunde zu realisieren. Da zudem die Geschwindigkeit des Kolbens 3 im Bereich des oberen Totpunkts vergleichsweise gering ist, reichen solche Raten vollkommen aus, um jeden einzelnen Kolbenring 31 mit Ultraschallimpulsen abzutasten.

Ein von dem Ultraschallwandler 5 ausgesendeter Ultraschallimpuls läuft durch das Kopplungselement 6 und in radialer Richtung auf die Zylinderachse A zu. Dabei passiert er je nach der momentanen Stellung des Kolbens mehrere Grenzflächen zwischen Medien mit unterschiedlichem Schallwellenwiderstand, beispielsweise die Grenzflächen zwischen: Lauffläche 23 und Ölfilm; Ölfilm und Kolbenring 31 (falls sich gerade ein Kolbenring 31 im Messbereich des Ultraschallwandlers 5 befindet, also auf gleicher axialer Höhe wie die Ausnehmung 7 ) oder Ölfilm und Luft (falls der Messbereich z. B. gerade zwischen zwei Kolbenringen 31 liegt); Beschichtung31a des Kolbenrings 31 (falls vorhanden) und Kolbenring 31, radial innenliegende Begrenzungsfläche 31 b des Kolbenrings und dahinter liegender Raum.

An diesen Grenzflächen wird der Ultraschallimpuls teilweise reflektiert, wodurch ein Echosignal entsteht, und teilweise transmittiert. Aus einem Ultraschallimpuls können also mehrere Echosignale resultieren, die von unterschiedlichen Grenzflächen stammen und somit unterschiedliche Laufzeiten aufweisen. Die Echosignale gelangen durch das Kopplungselement 6 zum Ultraschallwandler 5 und werden von diesem in elektrische Signale umgewandelt, welche als Messignale über die Leitungen 10 an die Auswerteeinheit 11 zur Verarbeitung und Auswertung übermittelt werden. Aus der Laufzeit der Echosignale und/oder aus der Laufzeitdifferenz zwischen Echosignalen, die vom selben Ultraschallimpuls resultieren, sind dann verschiedene Strecken bestimmbar, die aktuellen Abmessungen im Zylinder 1 entsprechen und somit zur Bestimmung des Zustands der Gegenlaufpartner herangezogen werden können. Mit heute bekannten Ultraschallwandlern können Schichtdicken von weniger als 0.01 mm bestimmt werden. So kann die Auswerteeinheit 11 insbesondere die folgenden Abmessungen ermitteln: die Wanddicke D1 des Zylindereinsatzes 2 zwischen der Begrenzungsfläche 71 der Ausnehmung 7 und der Lauffläche 23 bzw. 23a, die relative oder die absolte Dicke des Ölfilms zwischen dem Kolbenring 31 und der Lauffläche 23 bzw. 23a, die radiale Dicke D3 der Beschichtung 31a des Kolbenrings 31, die radiale Dicke D2 jedes Kolbenrings 31.

In sinngemäss gleicher Weise wird mittels des als Referenzgeber dienenden Ultraschallwandlers 5a der Abstand R, welcher der Wanddicke des Zylindereinsatzes 2 zwischen der Begrenzungsfläche71 a der Ausnehmung 7a und der radial innenliegenden Begrenzungsfläche des Zylindereinsatzes 2 entspricht, als Referenzsignal ermittelt. Da der Abstand R für Normaltemperatur bekannt ist, kann dieses Referenzsignal zur Kalibrierung der Messsignale, insbesondere zur Kompensation thermisch bedingter Schwankungen verwendet werden.

Mittels der hier beschriebenen Anordnung kann somit der absolute oder der relative Verschleiss der Lauffläche während des Betriebs der Brennkraftmaschine ermittelt und überwacht werden, nämlich z. B. durch einen Vergleich des aktuellen Wertes für den Abstand R mit dem aktuellen Wert der Wanddicke D1. Ferner kann der Verschleiss jedes einzelnen Kolbenrings 31 bzw. der Beschichtung 31 a jedes Kolbenrings 31 aus den aktuellen Werten für die Dicke D2 bzw. D3 ermittelt werden.

Neben der Bestimmung des Verschleisses kann anhand der Messsignale die Funktionstüchtigkeit der Kolbenringe 31 überprüft bzw. überwacht werden. Falls beispielsweise ein Kolbenring 31 seine Vorspannung verloren hat oder aus sonst einem Grunde nicht mehr dichtend an der Lauffläche 23 anliegt, so existiert zwischen diesem Kolbenring 31 und der Lauffläche 23 ein Luftspalt, der anhand der Messignale detektiert werden kann. Auch der Bruch eines Kolbenrings und die Lage des Kolbenringschlosses sind anhand der Messsignale detektierbar. Zudem ist anhand der Messsignale auch der Zustand des Ölfilms auf der Lauffläche 23,23a bestimmbar.

Natürlich sind auch solche Ausgestaltungen der Erfindung möglich, bei denen für jeden Zylindereinsatz mehrere Ultraschallsensoren zum Bestimmen des Zustands der Gegenlaufpartner vorgesehen sind. Diese sind dann über den Umfang des Zylindereinsatzes 2 verteilt und jeweils von aussen im Zylindereinsatz 2 montiert, z. B. in sinngemäss gleicher Weise wie vorne erläutert.

Auch ist es möglich, zur Erzeugung des Referenzsignals andere Mittel als den hier beschriebenen und als Ultraschallwandler 5a ausgestalteten Referenzgeber vorzusehen. Insbesondere können diese Mittel auch in dem Ultraschallwandler 5, mit dem die Messsignale erzeugt werden, integriert sein. Vorzugsweise wird als Referenzsignal der aktuelle Wert einer Abmessung verwendet, die sich nicht aufgrund von Verschleiss verändert.

Vorzugsweise erfüllt die Auswerteeinheit insbesondere die folgenden Aufgaben:
- Ermittelung des Verschleisses der Lauffläche 23,23a des Zylindereinsatzes 2 über die Zeit, z. B. in Abhängigkeit der Motorbetriebsstunden;
- Bestimmung des Verschleisses und/oder der absoluten Dicke D2,D3 jedes einzelnen Kolbenrings 31 bzw. jeder Beschichtung 31a über die Zeit;
- Prüfung, ob jeder Kolbenring 31 Kontakt mit der Lauffläche 23, 23a hat;
- Prüfung, ob Änderungen im Verschleissverhalten auftreten;
- Überwachen, ob der Verschleiss des Zylindereinsatzes 2 und/oder der Kolbenringe 31 einen vorgebbaren Grenzwert überschreitet.

Vorzugsweise veranlasst die Auswerteeinheit 11 das Auslösen eines Alarmsignals, wenn ein Kolbenring 31 gebrochen ist oder ein Kolbenring 31 keine Vorspannung mehr hat oder ein Kolbenring aus sonst einem Grund den Kontakt zur Lauffläche 23, 23a verloren hat bzw. nicht mehr dichtet oder eine Beschichtung 31 a auf einem Kolbenring 31 ganz bzw. teilweise fehlt oder wenn der Verschleiss bzw. die Verschleissrate des Zylindereinsatzes 2 und/oder eines Kolbenrings 31 bzw. einer Beschichtung 31 a einen vorgebbaren Grenzwert überschreitet.

In der Praxis kommt es häufig vor, dass sich die Kolbenringe 31 über den Umfang gesehen nicht gleichmässig abnutzen. In solchen Fällen kann die Auswerteeinheit einen repräsentativen Mittelwert des Verschleisses generieren.

Ferner ist es möglich, anhand der erfassten Messsignale Trends für den zukünftigen Verschleiss der Gegenlaufpartner zu ermitteln, um so beispielsweise den vorausichtlichen Zeitpunkt für einer Revision abzuschätzen.

Es versteht sich, dass bei Brennkraftmaschinen, insbesondere Grossdieselmotoren, die mehr als einen Zylinder aufweisen, an jedem Zylinder mindestens ein Ultraschallwandler 5 zum Bestimmen des Zustands der Gegenlaufpartner des jeweiligen Zylinders vorgesehen sein kann. Dabei ist es möglich, mehrere oder alle Ultraschallwandler 5 mit einer gemeinsamen Auswerteeinheit 11 bzw. mit einer gemeinsamen Versorgungs- und Auswerteeinheit zu verbinden. Diese gemeinsame Einheit kann, z. B. mittels eines Messstellenumschalters, zyklisch einen Zylinder nach dem anderen messen und die jeweils erfassten Messsignale weiterverarbeiten, auswerten und speichern.

Durch die Erfindung wird eine Anordnung bzw. ein Verfahren zur Bestimmung des Zustand von einem oder mehreren Gegenlaufpartnern im Zylinder einer Brennkraftmaschine bereitgestellt, mit dem insbesondere der Verschleiss der Lauffläche und der Kolbenringe sowie die Funktionstüchtigkeit jedes einzelnen Kolbenrings während des Betriebs der Brennkraftmaschine ermittelt werden kann.

## Patentansprüche

1. Verfahren zur Bestimmung des Zustands eines Gegenlaufpartners im Zylinder (1) einer Brennkraftmaschine, die einen mit mindestens einem Kolbenring (31) versehenen Kolben (3) aufweist, der entlang einer Lauffläche (23) eines Zyfindereinsatzes (2) im Zylinder (1) hin- und herbeweglich angeordnet ist, bei welchem Verfahren mittels eines im Zylinder (1) angeordneten Ultraschallwandlers (5) der Gegenlaufpartner (23,31) mit Ultraschallsignalen beaufschlagt wird und die von dem Gegenlaufpartner (23,31) reflektierten Echosignale zur Bestimmung des Zustands des Gegenlaufpartners (23,31) herangezogen werden **dadurch gekennzeichnet, dass** der Ultraschallwandler (5) in einer Ausnehmung (7) angeordnet wird, welche im Kragen (21) des Zylindereinsatzes (2) vorgesehen ist.

2. Verfahren nach Anspruch 1, bei welchem die Ultraschallsignale als Ultraschallimpulse mit einer Rate ausgesendet werden, die so bemessen ist, dass bei der Hubbewegung des Kolbens (3) jeder Kolbenring (31) von mindestens einem separaten Ultraschallimpuls beaufschlagt wird.

3. Verfahren nach Anspruch 1 oder 2, bei welchem die Echosignale einer Auswerteeinheit (11) zugeführt werden, welche anhand der Echosignale repräsentative Werte für mindestens eine der folgenden Grössen bestimmt:
- absoluter und/oder relativer Verschleiss des Zylindereinsatzes (2);
- Dicke (D2) des Kolbenrings (31) oder der Kolbenringe (31) in der bezüglich der Zylinderachse (A) radialen Richtung;
- radiale Dicke (D3) einer auf dem Kolbenring vorgesehen Beschichtung (31a);
- radiale Breite eines Luftspalts zwischen dem Kolbenring (31) und der Lauffläche (23)
- radiale Dicke eines Ölfilms zwischen dem Kolbenring (31) und der Lauffläche (23).

4. Verfahren nach einem der Ansprüche 1-3, bei welchem ein Referenzsignal zum Kompensieren thermisch bedingter Änderungen erzeugt wird und zur Bestimmung des Zustands des Gegenlaufpartners (23,31) herangezogen wird.

5. Verfahren nach einem der vorangehenden Ansprüche, bei welchem Trends für den Verschleiss des Gegenlaufpartners (23,31) ermittelt werden.

6. Anordnung zur Bestimmung des Zustands eines Gegenlaufpartners im Zylinder (1) einer Brennkraftmaschine, die einen mit mindestens einem Kolbenring (31) versehenen Kolben (3) aufweist, der entlang einer Lauffläche (23) eines Zylindereinsatzes (2) im Zylinder (1) hin- und herbeweglich angeordnet ist, welche Anordnung einen Ultraschallwandler (5) umfasst, der so im Zylinder (1) angeordnet ist, dass er den Gegenlaufpartner (23,31) mit Ultraschallsignalen beaufschlagen und die von dem Gegenlaufpartner (23,31) reflektierten Echosignale empfangen kann, **dadurch gekennzeichnet, dass** der Ultraschallwandler (5) in einer Ausnehmung (7) angeordnet ist, welche im Kragen (21) des Zylindereinsatzes (2) vorgesehen ist.

7. Anordnung nach Anspruch 6, bei welcher der Ultraschallwandler (5) in der im Zylindereinsatz (2) vorgesehen Ausnehmung (7) angeordnet ist, die so platziert ist, dass alle Kolbenringe (31) bei der Hubbewegung des Kolbens (3) den Ultraschallwandler passieren.

8. Anordnung nach Anspruch 7, bei welcher sich die Ausnehmung (7) in radialer Richtung erstreckt, und bei welcher zwischen dem Ultraschallwandler (5) und der radial innenliegenden Begrenzungsfläche (71) der Ausnehmung (7) ein Kopplungselement (6) vorgesehen ist, um die Ultraschallsignale von dem Ultraschallwandler (5) auf die Lauffläche (23) zu übertragen.

9. Anordnung nach einem der Ansprüche 6-8 mit Mitteln zum Erzeugen eines Referenzsignals zum Kompensieren thermisch bedingter Änderungen.

10. Anordnung nach Anspruch 9, bei welchem die Mittel zum Erzeugen eines Referenzsignals einen weiteren Ultraschallwandler (5a) umfassen, der so angeordnet ist, dass er die radial innenliegende Begrenzugsfläche des Zylindereinsatzes (2) in einem Bereich mit Ultraschallsignalen beaufschlagt, der ausserhalb des von den Kolbenringen (31) bei der Hubbewegung des Kolbens (3) überstrichenen Bereichs liegt.

11. Brennkraftmaschine, insbesondere Grossdieselmotor, mit einer Anordnung gemäss einem der Ansprüche 6-10.

## Claims

1. A method for determining the state of a counter-running partner in the cylinder (1) of a combustion engine which has a piston (3) provided with at least one piston ring (31) and which is arranged movable to and fro along a running surface (23) of a cylinder insert (2) in the cylinder (1), in which method the counter-running partner (23, 31) is exposed to ultrasound signals by means of an ultrasonic transducer (5) arranged in the cylinder (1) and the echo signals reflected from the counter-running partner (23, 31) are used to determine the state of the counter-running partner (23, 31), **characterized in that** the ultrasonic transducer (5) is arranged in a recess (7) which is provided in the collar (21) of the cylinder insert (2).

2. A method in accordance with claim 1, in which the ultrasonic signals are transmitted as ultrasonic pulses with a rate which is so dimensioned that during the stroke movement of the piston (3) each piston ring (31) is exposed to at least one separate ultrasonic pulse.

3. A method in accordance with claim 1 or claim 2, in which the echo signals are fed to an evaluation unit (11) which determines representative values for at least one of the following parameters with respect to the echo signals:
- absolute and/or relative wear of the cylinder insert (2);
- thickness (D2) of the piston ring (31) or of the piston rings (31) in the radial direction relative to the cylinder axis (A);
- the radial thickness (D3) of a coating (31a) provided on the piston ring;
- the radial width of an air gap between the piston ring (31) and the running surface (23);
- the radial thickness of an oil film between the piston ring (31) and the running surface (23).

4. A method in accordance with any one of the claims 1 to 3, in which a reference signal is generated to compensate for thermally caused changes and is used to determine the state of the counter-running partner (23, 31).

5. A method in accordance with any one of the preceding claims, in which trends for the wear of the counter-running partner (23, 31) are determined.

6. An arrangement for the determination of the state of a counter-running partner in the cylinder (1) of a combustion engine which has a piston (3) provided with at least one piston ring (31) and which is arranged movable to and fro along a running surface (23) of a cylinder insert (2) in the cylinder (1), said arrangement including an ultrasonic transducer (5) arranged which is so arranged in the cylinder (1) that it exposes the counter-running partner (23, 31) to ultrasonic signals and can receive the echo signals reflected from the counter-running partner (23, 31), **characterized in that** the ultrasonic transducer (5) is arranged in a recess (7) which is provided in the collar (21) of the cylinder insert (2).

7. An arrangement in accordance with claim 6, in which the ultrasonic transducer (5) is so arranged in the recess (7) provided in the cylinder insert (2) and the recess (7) is so placed that all piston rings (31) pass the ultrasonic transducer during the stroke movement of the piston (3).

8. An arrangement in accordance with claim 7, in which the recess (7) extends in the radial direction and in which a coupling element (6) is provided between the ultrasonic transducer (5) and the radially inwardly disposed boundary surface (71) of the recess (7) in order to transmit the ultrasonic signals from the ultrasonic transducer (5) onto the running surface (23).

9. An arrangement in accordance with any one of the claims 6 to 8, having means for generating a reference signal for the compensation of thermally caused changes.

10. An arrangement in accordance with claim 9, in which the means for generating a reference signal include a further ultrasonic transducer (5a) which is so arranged that it exposes the radially inwardly disposed boundary surface of the cylinder insert (2) with ultrasonic signals in a region which lies outside of the region swept over by the piston rings (31) during the stroke movement of the piston (3).

11. A combustion engine, in particular a large diesel engine, having an arrangement in accordance with any one of the claims 6 to 10.

## Revendications

1. Procédé pour la détermination de l'état d'une pièce mobile dans le cylindre (1) d'un moteur à combustion interne, qui présente un piston (3) muni d'au moins un segment de piston (31), qui est disposé d'une manière déplaçable alternativement le long d'une face de glissement (23) d'un insert de cylindre (2) dans le cylindre (1), procédé dans lequel, au moyen d'un transducteur d'ultrasons (5) disposé dans le cylindre (1), la pièce mobile (23, 31) est chargée en signaux ultrasoniques, et les signaux d'écho réfléchis par la pièce mobile (23, 31) sont utilisés pour déterminer l'état de la pièce mobile (23, 31), **caractérisé en ce que** le transducteur ultrasonique (5) est disposé dans un évidement (7) qui est prévu dans le col (21) de l'insert de cylindre (2).

2. Procédé selon la revendication 1, dans lequel les signaux ultrasoniques sont émis comme impulsions ultrasoniques selon un débit qui est dimensionné de façon que lors du mouvement de course du piston (3), chaque segment de piston (31) est chargé par au moins une impulsion ultrasonique séparée.

3. Procédé selon la revendication 1 ou 2, dans lequel les signaux d'écho sont transmis à une unité d'évaluation (11), qui détermine à l'aide des signaux d'écho des valeurs représentatives pour au moins une des grandeurs suivantes:
- usure absolue et/ou relative de l'insert de cylindre (2);
- épaisseur (D2) du segment de piston (31) ou des segments de piston (31) dans la direction radiale par rapport à l'axe de cylindre (A);
- épaisseur radiale (D3) d'un revêtement (31a) prévu sur le segment de piston;
- largeur radiale d'une fente d'air entre le segment de piston (31) et la face de roulement (23);
- épaisseur radiale d'un film d'huile entre le segment de piston (31) et la face de roulement (23).

4. Procédé selon l'une des revendications 1 à 3, dans lequel un signal de référence est produit pour la compensation de modifications provoquées thermiquement et est utilisé pour la détermination de l'état de la pièce mobile (23, 31).

5. Procédé selon l'une des revendications précédentes, dans lequel sont déterminées des tendances se rapportant à l'usure de la pièce mobile (23, 31).

6. Agencement pour la détermination de l'état d'une pièce mobile dans le cylindre (1) d'un moteur à combustion interne, qui présente un piston (3) muni d'au moins un segment de piston (31), qui est disposé d'une manière déplaçable alternativement le long d'une face de roulement (23) d'un insert de cylindre (2) dans le cylindre (1), agencement qui comprend un transducteur d'ultrasons (5) qui est disposé de telle sorte dans le cylindre (1) qu'il peut charger la pièce mobile (23, 31) en signaux ultrasoniques et peut recevoir les signaux d'écho réfléchis par la pièce mobile (23, 31), **caractérisé en ce que** le transducteur d'ultrasons (5) est disposé dans un évidement (7) qui est prévu dans le col (21) de l'insert de cylindre (2).

7. Agencement selon la revendication 6, dans lequel le transducteur d'ultrasons (5) est disposé dans l'évidement (7) prévu dans l'insert de cylindre (2), qui est placé de telle sorte que tous les segments de piston (31), lors du mouvement de course du piston (3), passent devant le transducteur d'ultrasons.

8. Agencement selon la revendication 7, dans lequel l'évidement (7) s'étend dans la direction radiale, et dans lequel est prévu entre le transducteur d'ultrasons (5) et la face de délimitation (71) située radialement à l'intérieur de l'évidement (7) un élément de couplage (6) pour transférer les signaux ultrasoniques du transducteur d'ultrasons (5) à la face de roulement (23).

9. Agencement selon l'une des revendications 6 à 8 avec des moyens pour produire un signal de référence pour la compensation de modifications provoquées thermiquement.

10. Agencement selon la revendication 9, dans lequel les moyens pour produire un signal de référence comprennent un autre transducteur d'ultrasons (5a), qui est disposé de telle sorte qu'il charge la face de délimitation située radialement à l'intérieur de l'insert de cylindre (2) dans une zone en signaux ultrasoniques qui se situe à l'extérieur de la zone sur laquelle passent les segments de piston (31) lors du mouvement de course du piston (3).

11. Moteur à combustion interne, en particulier grand moteur Diesel, avec un agencement selon l'une des revendications 6 à 10.
